# EUROPÄISCHE PATENTSCHRIFT

(11) **EP 2 892 757 B1**
(45) Veröffentlichungstag und Bekanntmachung des Hinweises auf die Patenterteilung: **10.10.2018**
(21) Anmeldenummer: 13750891.7
(22) Anmeldetag: 23.08.2013
(51) Int. Cl.: B60N 2/14

(54) **FAHRZEUGSITZ MIT EINER DREHVORRICHTUNG**
VEHICLE SEAT WITH A ROTATION DEVICE
SIÈGE DE VÉHICULE AVEC UN DISPOSITIF DE ROTATION

(30) Priorität: 06.09.2012 DE 102012017772
(43) Veröffentlichungstag der Anmeldung: 15.07.2015
(73) Patentinhaber: Adient Luxembourg Holding S.à r.l., 1855 Luxembourg (LU)
(72) Erfinder: GILMANN, Alexander, 45470 Mülheim/Ruhr (DE); GOLINSKI, Andreas, 44319 Dortmund (DE)
(74) Vertreter: Liedhegener, Ralf
(86) Internationale Anmeldenummer: PCT/EP2013/067510
(87) Internationale Veröffentlichungsnummer: WO 2014/037232

(56) Entgegenhaltungen:
- DE-A1-102010 044 654
- DE-B3-102010 053 802

## Beschreibung

Die Erfindung betrifft einen Fahrzeugsitz mit einer Drehvorrichtung mit den Merkmalen des Oberbegriffs des Anspruchs 1.

### Stand der Technik

Aus der DE 10 2010 053 802 B3 ist ein gattungsgemäßer Fahrzeugsitz mit einer Drehvorrichtung bekannt, welche ein feststehendes Basisbauteil und einen relativ dazu um eine senkrechte Drehachse drehbaren Sitzteilträger umfasst. Das feststehende Basisbauteil ist dabei an einer Fahrzeugstruktur befestigt und an dem Sitzteilträger ist ein Sitzteil des Fahrzeugsitzes befestigbar.

Zur Verriegelung des Basisbauteils mit dem Sitzteilträger weist die Drehvorrichtung eine Verriegelungsvorrichtung auf, welche eine Verriegelungsscheibe und einen schwenkbaren Verriegelungshebel umfasst.

Zur Crashsicherung sind an dem Basisbauteil im in Fahrtrichtung hinteren Endbereich zwei Fangbolzen angeordnet, welche eine pilzartige Verbreiterung aufweisen. Der Sitzteilträger weist zwei Ausnehmungen auf, welche in der Grundposition der Drehvorrichtung von den Fangbolzen durchragt werden. Die Fangbolzen verhindern im Crashfall ein Auseinanderreißen des Sitzteilträgers von dem Basisbauteil.

Die Fangbolzen sind jeweils von einer elastischen Hülle umschlossen, an welchen die Ausnehmungen des Sitzteilträgers in der Grundposition anliegen. Die elastischen Hüllen eliminieren zwischen dem Basisbauteil und dem Sitzteilträger vorhandenes Spiel, reduzieren auftretende Geräusche und erhöhen die Eigenfrequenz des Fahrzeugsitzes.

### Aufgabe

Der Erfindung liegt die Aufgabe zu Grunde, eine Alternative zu einem Fahrzeugsitz mit einer Drehvorrichtung der eingangs genannten Art anzugeben.

### Lösung

Diese Aufgabe wird erfindungsgemäß durch einen Fahrzeugsitz mit einer Drehvorrichtung mit den im Anspruch 1 genannten Merkmalen gelöst. Vorteilhafte Ausgestaltungen, welche einzeln oder in Kombination miteinander eingesetzt werden können, sind Gegenstand der Unteransprüche.

Ein gattungsgemäßer Fahrzeugsitz mit einer Drehvorrichtung umfasst ein Basisbauteil und einen relativ dazu um eine Drehachse drehbaren Sitzteilträger, sowie mindestens eine Fangeinheit zur Verhinderung eines Auseinanderreißens des Sitzteilträgers von dem Basisbauteil im Crashfall.

Erfindungsgemäß ist vorgesehen, dass die Fangeinheit ein Einführelement und ein Aufnahmeelement, in welches das Einführelement einführbar ist, umfasst, und dass das Aufnahmeelement mindestens ein Federelement aufweist, welches durch einen Kontakt mit dem eingeführten Einführelement eine Verformung erfährt, wobei das Federelement derart ausgestaltet ist, dass seine Federsteifigkeit bei eingeführtem Einführelement annähernd gleich groß ist wie bei nicht eingeführtem Einführelement, und dass seine Federsteifigkeit bei einer weiteren Verformung durch das Einführelement ansteigt.

Dadurch, dass mindestens eine Fangeinheit zur Verhinderung eines Auseinanderreißens des Sitzteilträgers von dem Basisbauteil im Crashfall vorgesehen ist, welche ein Einführelement und ein Aufnahmeelement, in welches das Einführelement einführbar ist, umfasst, und dass das Aufnahmeelement mindestens ein Federelement aufweist, welches durch einen Kontakt mit dem eingeführten Einführelement eine Verformung erfährt, wobei das Federelement derart ausgestaltet ist, dass seine Federsteifigkeit bei eingeführtem Einführelement annähernd gleich groß ist wie bei nicht eingeführtem Einführelement, und dass seine Federsteifigkeit bei einer weiteren Verformung durch das Einführelement ansteigt, wird zwischen dem Basisbauteil und dem Sitzteilträger vorhandenes Spiel reduziert, auftretende Geräusche werden reduziert und die Eigenfrequenz des Fahrzeugsitzes wird erhöht.

Dabei wird dem Einführelement beim Einfahren in das Aufnahmeelement nur eine verhältnismäßig kleine Federkraft durch das Federelement entgegengesetzt, wodurch auch eine Bewegung des Einführelements durch das Aufnahmeelement hindurch nur unwesentlich erschwert wird. Bei einer folgenden Bewegung des eingeführten Einführelements in Vertikalrichtung relativ zu dem Aufnahmeelement, insbesondere verursacht durch eine Schwingung, wird jedoch das Federelement weiter verformt und seine Federsteifigkeit dadurch erhöht. Dadurch wird die von dem Federelement aufgebrachte Federkraft deutlich vergrößert.

Die Federsteifigkeit des Federelements ist bei verhältnismäßig kleiner Verformung also annähernd konstant und wächst bei größerer Verformung verhältnismäßig stark an. Die Federkraft des Federelements ist also bei verhältnismäßig kleiner Verformung annähernd proportional zu der Verformung. Bei größerer Verformung wächst die Federkraft verhältnismäßig stark und nichtlinear an.

Das Federelement weist vorteilhaft zentral einen Biegebereich in Form eines Kreissegments mit annähernd konstantem Radius auf, wobei an den Biegebereich beidseitig je ein Schenkelbereich anschließt, welcher bei nicht eingeführtem Einführelement annähernd gerade verläuft. Vorteilhaft schließt dabei an jeden Schenkelbereich je ein Hakenbereich an, welcher zur Befestigung des Federelements an dem Aufnahmeelement dient, und welcher im Querschnitt U-förmig ausgestaltet ist.

Das Aufnahmeelement weist vorzugsweise einen U-förmigen Querschnitt mit einem oberen Schenkel, einem unteren Schenkel und einem Basisschenkel auf, wobei an dem oberen Schenkel und an dem unteren Schenkel je ein Federelement vorgesehen ist. Dabei liegen die Hakenbereiche jeweils mit einem Auflageabschnitt an dem jeweiligen Schenkel an.

Die Federelemente befinden sich vorzugsweise weitgehend in einem Raum, welcher von dem oberen Schenkel, dem Basisschenkel und dem unteren Schenkel umgeben ist.

Dabei sind die Biegebereiche der Federelemente einander zugewandt und nehmen das eingeführte Einführelement zwischen sich auf. Die Biegebereiche der Federelemente werden dann von dem eingeführten Einführelement auseinander und auf die Schenkel zu gedrückt.

Gemäß einer vorteilhaften Ausgestaltung der Erfindung verlaufen die Schenkelbereiche bei nicht eingeführtem Einführelement von dem Schenkel unter einem Winkel von 10° bis 20°, vorzugsweise 15° weg.

### Figuren und Ausführungsformen der Erfindung

Im Folgenden ist die Erfindung anhand von in den Zeichnungen dargestellten vorteilhaften Ausführungsbeispielen näher erläutert. Die Erfindung ist jedoch nicht auf diese Ausführungsbeispiele beschränkt. Es zeigen:

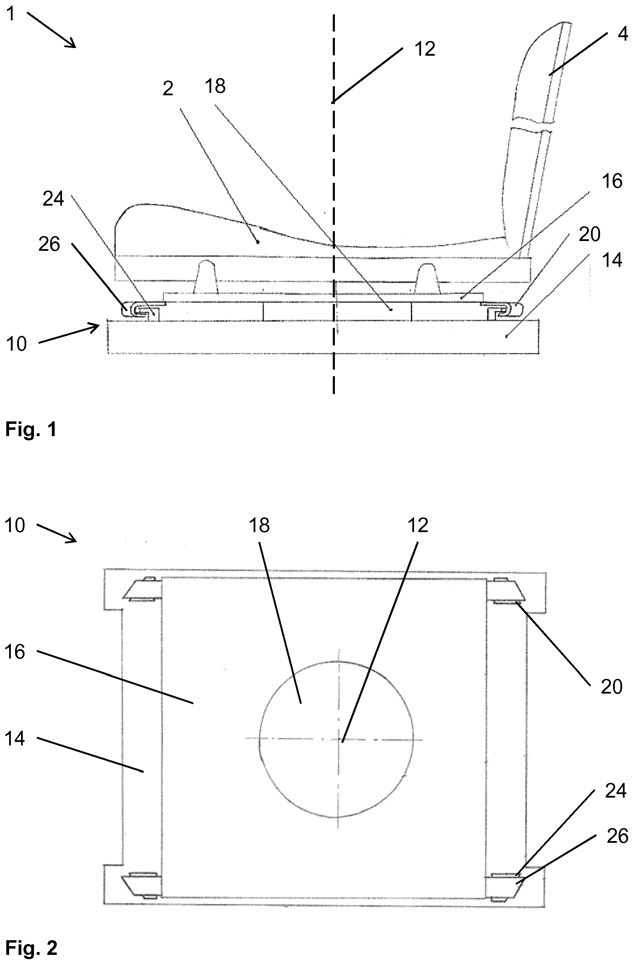

- Fig. 1:: eine schematische Seitenansicht eines Fahrzeugsitzes,
- Fig. 2:: eine Draufsicht auf eine Drehvorrichtung in Vertikalrichtung,
- Fig. 3:: einen senkrechten Schnitt durch eine Fangeinheit,
- Fig. 4:: eine perspektivische Ansicht eines Aufnahmeelements einer Fangeinheit,
- Fig. 5:: eine Blattfeder einer Fangeinheit gemäß einem ersten Ausführungsbeispiel und
- Fig. 6:: eine Blattfeder einer Fangeinheit gemäß einem zweiten Ausführungsbeispiel.

Ein Fahrzeugsitz 1 für ein Kraftfahrzeug weist ein Sitzteil 2, welches einen Sitzrahmen umfasst, und eine daran angebrachte, neigungseinstellbare Rückenlehne 4 auf.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Mittels eines nicht dargestellten, manuell zu bedienenden Lehneneinstellbeschlags ist die Rückenlehne 4 neigungseinstellbar, das bedeutet, der Winkel zwischen dem Sitzteil 2 und der Rückenlehne 4 ist einstellbar. Alternativ ist auch ein elektrischer Antrieb denkbar.

An dem in Vertikalrichtung oberen Ende der Rückenlehne 4, welches dem Sitzteil 2 abgewandt ist, ist ferner eine nicht dargestellte Kopfstütze angebracht.

Mittels eines nicht dargestellten Längseinstellers, welcher zwei mit dem Fahrzeugboden des Kraftfahrzeuges verbundene Unterschienen sowie zwei mit dem Fahrzeugsitz 1 verbundene Oberschienen aufweist, ist der Fahrzeugsitz 1 längseinstellbar. Das bedeutet, das Sitzteil 2 ist zusammen mit der Rückenlehne 4 in Längsrichtung, welche annähernd der Fahrtrichtung entspricht, einstellbar. Dazu ist jede der Oberschienen in jeweils in einer der parallel in Längsrichtung verlaufenden Unterschienen verschiebbar geführt. Jede der beiden Oberschienen bildet jeweils mit der zugeordneten Unterschiene ein Sitzschienenpaar. Der Längseinsteller umfasst somit zwei parallel verlaufende Sitzschienenpaare.

Mittels einer nicht dargestellten Verriegelungsvorrichtung ist jede der beiden Oberschienen mit der jeweiligen Unterschiene verriegelbar. Die Verriegelungsvorrichtung umfasst einen Entriegelungsbügel, mittels welchem ist die Verriegelungsvorrichtung entriegelbar ist. Alternativ ist auch hier ein elektrischer Antrieb denkbar.

Das Sitzteil 2 umfasst ein als Schaumteil ausgebildetes Sitzkissen. Auch die Rückenlehne 4 ist mit einem als Schaumteil ausgebildeten Rückenlehnenpolster gepolstert. Das Sitzkissen und das Rückenlehnenpolster sind jeweils mit einem Bezug überzogen. Das Sitzkissen sowie das Rückenlehnenpolster erhöhen maßgeblich den Sitzkomfort für einen Insassen des Fahrzeugsitzes 1.

Mittels einer Drehvorrichtung 10 ist das Sitzteil 2, zusammen mit der Rückenlehne 4, um eine im Wesentlichen in Vertikalrichtung verlaufende Drehachse 12 drehbar. Die Drehvorrichtung 10 umfasst ein feststehendes Basisbauteil 14 und einen relativ dazu um die Drehachse 12 drehbaren Sitzteilträger 16, an welchem das Sitzteil 2 befestigt ist. Vorliegend ist der Sitzteilträger 16 um einen Winkel von 180° relativ zu dem Basisbauteil 14 drehbar. Vorliegend ist das Basisbauteil 14 an den Oberschienen des Längseinstellers befestigt. Alternativ ist das Basisbauteil auch direkt an der Fahrzeugstruktur befestigbar.

Ferner ist ein Drehlager 18 vorgesehen, welches eine Drehung des Sitzteilträgers 16 relativ zu dem Basisbauteil 14 ermöglicht. Mittels einer nicht dargestellten Verriegelungsvorrichtung ist der Sitzteilträger 16 mit dem Basisbauteil 14 fixierbar, so dass eine Drehung des Sitzteilträgers 16 relativ zu dem Basisbauteil 14 verhindert ist. Ein gattungsgemäßes Drehlager mit Verriegelungsvorrichtung ist beispielsweise aus der DE 102010053802 B3 bekannt, deren diesbezüglicher Offenbarungsgehalt ausdrücklich einbezogen wird.

Die Verriegelungsvorrichtung für das Drehlager 18 umfasst vorliegend einen nicht dargestellten zweiarmigen Verriegelungshebel, welcher um eine parallel zu der Drehachse 12 verlaufende Schwenkachse an dem Sitzteilträger 16 gelagert ist. Ferner umfasst die Verriegelungsvorrichtung eine nicht dargestellte Verriegelungsscheibe, welche konzentrisch um die Drehachse 12 an dem Basisbauteil 14 angeordnet ist.

An dem ersten Arm des Verriegelungshebels ist ein Vorsprung angebracht, welcher zur Fixierung des Sitzteilträgers 16 mit dem Basisbauteil 14 in eine in der Verriegelungsscheibe vorgesehene Nut eingreift. Eine nicht dargestellte Verriegelungsfeder beaufschlagt den Verriegelungshebel derart, dass der Vorsprung in die Nut hinein gedrückt wird.

Durch manuelle Beaufschlagung des freien Endes des zweiten Arms des Verriegelungshebels entgegen der Kraft der Verriegelungsfeder wird der Vorsprung aus der Nut heraus bewegt. Dadurch wird die Fixierung des Sitzteilträgers 16 mit dem Basisbauteil 14 aufgehoben und der Sitzteilträger 16 ist relativ zu dem Basisbauteil 14 um die Drehachse 12 drehbar.

Alternativ zu der beschriebenen Verriegelungsvorrichtung sind auch andere Vorrichtungen zur Fixierung des Sitzteilträgers 16 mit dem Basisbauteil 14 denkbar.

Zur Verhinderung eines Auseinanderreißens des Sitzteilträgers 16 von dem Basisbauteil 14, insbesondere im Crashfall, sind vorliegend vier Fangeinheiten 20 vorgesehen.

Dabei sind jeweils zwei Fangeinheiten 20 in dem in Fahrtrichtung vorderen Endbereich der Drehvorrichtung 10 und in dem in Fahrtrichtung hinteren Bereich der Drehvorrichtung 10 angeordnet. Dabei ist je eine der Fangeinheiten 20 in einem in Querrichtung linken äußeren Bereich und die andere der Fangeinheiten 20 in einem in Querrichtung rechten äußeren Bereich der Drehvorrichtung angebracht. Alternativ kann auch eine andere Anzahl von Fangeinheiten 20 vorgesehen sein, und die vorhandenen Fangeinheiten 20 können auch an anderen Stellen angeordnet sein.

Jede Fangeinheit 20 umfasst ein feststehendes Einführelement 24, welches an dem Basisbauteil 14 befestigt ist. Ferner umfasst jede Fangeinheit 20 ein Aufnahmeelement 26, welches an dem Sitzteilträger 16 befestigt ist und bei einer Drehung des Sitzteilträgers 16 um die Drehachse 12 relativ zu dem Basisbauteil 14 mit dreht. Es ist auch denkbar, das Einführelement 24 an dem Sitzteilträger 16 zu befestigen und das Aufnahmeelement 26 an dem Basisbauteil 14.

Die vorliegend vier Fangeinheiten 20 sind im Wesentlichen gleichartig aufgebaut, weshalb im Folgenden nur auf eine Fangeinheit 20 eingegangen wird.

In einer in Fahrtrichtung ausgerichteten Grundposition des Fahrzeugsitzes 1, in welcher ein Insasse des Fahrzeugsitzes 1 also in Fahrtrichtung blickt, ist das Einführelement 24 vollständig in das Aufnahmeelement 26 eingefahren.

Das Einführelement 24 weist einen Befestigungsbereich auf, welcher an dem Basisbauteil 14 befestigt ist. Vorliegend ist der Befestigungsbereich annähernd zylindrisch ausgeführt und mittels einer Schraubverbindung an dem Basisbauteil befestigt. Auch andere Ausgestaltungsformen des Befestigungsbereichs und andere Arten der Befestigung, insbesondere Schweißen, sind denkbar.

Ferner weist das Einführelement 24 einen Einführbereich auf, welcher vorliegend einstückig mit dem Befestigungsbereich ausgebildet ist. Alternativ können der Befestigungsbereich und der Einführbereich auch zweistückig ausgeführt und miteinander verbunden sein. Der Einführbereich ist im Wesentlichen als eine flache Platte ausgebildet, welche sich in einer Ebene senkrecht zur Vertikalrichtung erstreckt.

Das Aufnahmeelement 26 weist einen Grundkörper 30 auf, welcher im Querschnitt U-förmig ausgestaltet ist und einen oberen Schenkel 32, einen unteren Schenkel 34 und einen Basisschenkel 36 umfasst. Der obere Schenkel 32 und der untere Schenkel 34 verlaufen dabei parallel zueinander und parallel zu dem Einführbereich des Einführelements 24 in einer Ebene senkrecht zur Vertikalrichtung. Der Basisschenkel 36 verläuft senkrecht zu dieser Ebene und verbindet den oberen Schenkel 32 mit dem unteren Schenkel 34.

Dabei ist der obere Schenkel 32 an dem Sitzteilträger 16 befestigt, vorliegend verschraubt. Es ist auch denkbar, den oberen Schenkel 32 des Grundkörpers 30 des Aufnahmeelements 26 auf andere Art an dem Sitzteilträger 16 anzubringen, beispielsweise durch Schweißen. Ebenso ist es denkbar, den unteren Schenkel 34 und/oder den Basisschenkel 36 des Grundkörpers 30 des Aufnahmeelements 26 an dem Sitzteilträger 16 zu befestigen.

Das Aufnahmeelement 26 weist ferner zwei Federelemente 40 auf, welche blattfederartig ausgebildet sind. Dabei ist je ein Federelement 40 an dem oberen Schenkel 32 des Grundkörpers 30 und an dem unteren Schenkel 34 des Grundkörpers 30 angeordnet. Die Federelemente 40 sind dabei derart angeordnet, dass sie sich weitgehend in einem Raum befinden, welcher von dem oberen Schenkel 32, dem Basisschenkel 36 und dem unteren Schenkel 34 umgeben ist.

Die beiden Federelemente 40 sind vorliegend im Wesentlichen gleichartig aufgebaut, weshalb im Folgenden nur auf das Federelement 40 eingegangen wird, welches an dem unteren Schenkel 32 angeordnet ist. Es ist auch denkbar, verschiedenartige Federelemente 40 vorzusehen. Insbesondere kann ein erstes Federelement 40 gemäß dem im Folgenden beschriebenen ersten Ausführungsbeispiel ausgebildet sein während das andere Federelement 40 gemäß dem im Anschluss beschriebenen zweiten Ausführungsbeispiel ausgebildet ist.

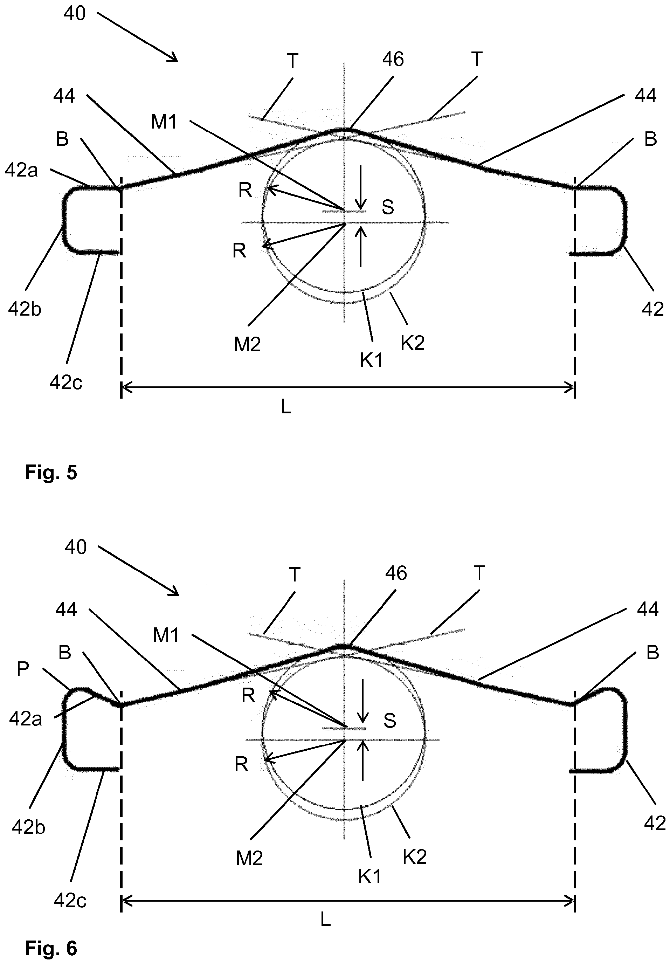

Das Federelement 40 gemäß dem ersten Ausführungsbeispiel, welches in Fig. 5 dargestellt ist, ist länglich ausgestaltet und besitzt an jedem Ende jeweils einen Hakenbereich 42. Jeder Hakenbereich 42 entsteht durch eine doppelte Umbiegung des jeweiligen Endes des Federelements 40 und ist im Querschnitt U-förmig ausgestaltet.

An jeden Hakenbereich 42 schließt jeweils ein Schenkelbereich 44 an, welcher annähernd geradlinig, beziehungsweise linear verläuft. Die beiden Schenkelbereiche 44 verlaufen dabei geneigt zueinander. Zentral zwischen den beiden Schenkelbereichen 44 ist ein Biegebereich 46 vorgesehen. Der Biegebereich 46 hat mittig annähernd die Form eines Kreissegments mit konstanten Radius.

Jeder Hakenbereich 42 umfasst dabei einen an einen der Schenkelbereiche 44 anschließenden Auflageabschnitt 42a, welcher annähernd senkrecht zur Vertikalrichtung, also annähernd horizontal verläuft. Der Auflageabschnitt 42a liegt dabei auf dem unteren Schenkel 34 flach auf. An den Auflageabschnitt 42a schließt ein Durchführungsabschnitt 42b an, welcher in Vertikalrichtung verläuft und eine in dem unteren Schenkel 32 vorgesehene Öffnung durchragt. An den Durchführungsabschnitt 42b schließt ein Halteabschnitt 42c an, welcher parallel zu dem Auflageabschnitt 42a und damit annähernd senkrecht zu der Vertikalrichtung verläuft. Der Auflageabschnitt 42a und der Halteabschnitt 42c umschließen somit den unteren Schenkel 34 des Grundkörpers 30 teilweise.

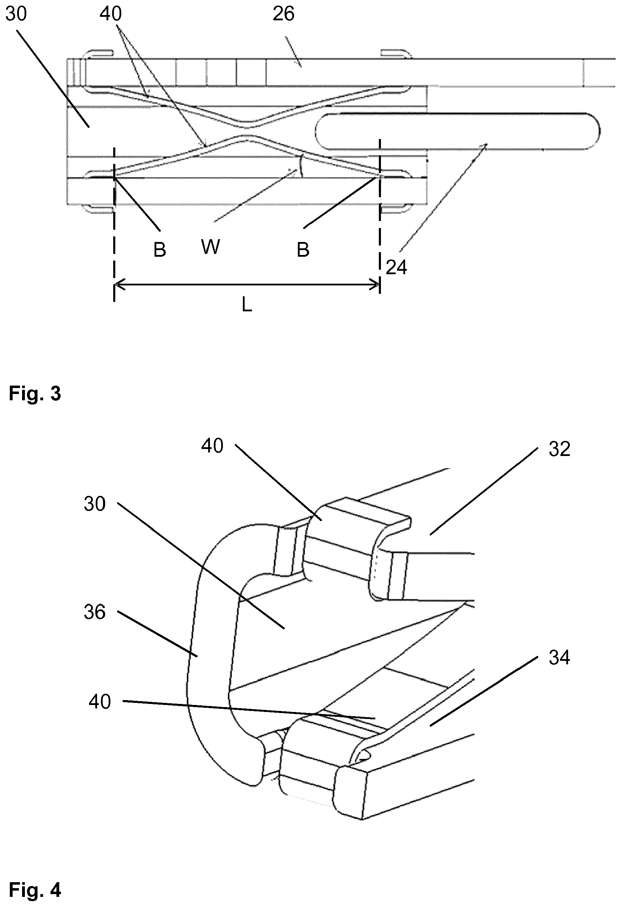

Im unbelasteten Zustand, welcher in Fig. 3, Fig. 4, Fig. 5 und Fig. 6 dargestellt ist, ist das Einführelement 24 nicht in das Aufnahmeelement 26 eingefahren und somit von den Federelementen 40 beabstandet. Die Federelement 40 sind somit nicht belastet.

In diesem Zustand verlaufen die Schenkelbereiche 44, beginnend an dem Auflageabschnitt 42a des anschließenden Hakenbereichs 42 in einem Winkel W zur Horizontalen von dem unteren Schenkel 34 weg. Der Winkel W ist verhältnismäßig klein, vorliegend etwa 15°, vorzugsweise liegt der Winkel W in einem Bereich zwischen 10° und 20°. Die beiden Berührpunkte B, an denen die Schenkelbereiche 44 den unteren Schenkel 34 verlassen, haben einen Abstand L zueinander.

Der zwischen den beiden Schenkelbereichen 44 liegende Biegebereich 46 ist mittig in Form eines Kreissegments eines ersten Kreises K1 ausgestaltet und weist einen Radius R sowie einen ersten Mittelpunkt M1 auf. Der Biegebereich 46 läuft im Anschluss an den mittigen Bereich beidseitig annähernd geradlinig aus und auf die Schenkelbereiche 44 zu.

In Fig. 5 und Fig. 6 sind Tangenten T an die Schenkelbereiche 44 eingezeichnet, welche durch die Berührpunkte B verlaufen. Die Tangenten T sind tangential an einen zweiten Kreis K2 angelegt. Der zweite Kreis K2 weist einen zweiten Mittelpunkt M2 auf und den gleichen Radius R wie der erste Kreis K1. Der zweite Mittelpunkt M2 ist gegenüber dem ersten Mittelpunkt M1 um die Strecke S in Vertikalrichtung verschoben.

Die Steifigkeit des Federelements 40 hängt von dem Abstand L zwischen den Berührpunkten B ab. Dabei wird die Federsteifigkeit höher, wenn der Abstand L kleiner wird.

Die Federsteifigkeit des Federelements 40 ist bei verhältnismäßig kleiner Verformung annähernd konstant und wächst bei größerer Verformung verhältnismäßig stark an. Die Federkraft des Federelements 40 ist also bei verhältnismäßig kleiner Verformung annähernd proportional zu der Verformung. Bei größerer Verformung wächst die Federkraft verhältnismäßig stark und nichtlinear an.

Beim Einfahren des Einführelements 24 in das Aufnahmeelement 26 ist der Abstand L zwischen den Berührpunkten B maximal und damit die Federsteifigkeit des Federelements 40 minimal. Zu Beginn des Einfahrvorgangs setzt das Federelement 40 somit eine verhältnismäßig kleine Federkraft entgegen. Bei Fortsetzen des Einfahrvorganges wird der Biegebereich 46 von dem Aufnahmeelement 24 in Richtung auf den unteren Schenkel 34 zu gedrückt. Dadurch verkleinert sich der Abstand L geringfügig, woraufhin die Federsteifigkeit des Federelements 40 geringfügig anwächst. Die von dem Federelement 40 entgegengesetzte Federkraft steigt dadurch annähernd linear an.

Ist das Einführelement 24 vollständig in das Aufnahmeelement 26 eingefahren, so ist der Abstand L zwischen den Berührpunkten B gegenüber dem unbelasteten Zustand verkleinert und damit die Federkraft des Federelements 40 vergrößert. In diesem Zustand gleicht das Federelement 40 in vertikale Richtung auftretende Schwingungen zwischen dem Basisbauteil 14 und dem Sitzteilträger 16 der Drehvorrichtung 10 optimal aus. Die Federsteifigkeit des Federelements 40 ist dabei immer noch verhältnismäßig klein. Das Federelement 40 bewirkt also nur eine verhältnismäßig kleine Reibungskraft auf das Einführelement 24. Dadurch kann sich das Einführelement 24 bei einer Drehung der Drehvorrichtung 10 um 180° verhältnismäßig einfach durch ein Aufnahmeelement 26 hindurch bewegen. Eine solche Bewegung des Einführelements 24 durch ein Aufnahmeelement 26 hindurch wird somit nur unwesentlich durch die Federelemente 40 behindert.

Die Änderung des Abstands L zwischen den Berührpunkten B im Verhältnis zu der Auslenkung des Biegebereichs 46 in Richtung auf den unteren Schenkel 34 zu hängt auch direkt von der Strecke S zwischen dem ersten Mittelpunkt M1 des ersten Kreises K1 und dem zweiten Mittelpunkt M2 des zweiten Kreises K2 des Biegebereichs 46 ab. Dabei entspricht eine größere Strecke S einer größeren Änderung des Abstand L und damit einem steileren Anwachsen der Federsteifigkeit des Federelements 40 L und somit einem steileren Anwachsen der Federkraft des Federelements 40.

Bei auftretenden Schwingungen in Vertikalrichtung drückt das Einführelement 24 in Vertikalrichtung abwechselnd auf eines der anliegenden Federelemente 40 und drückt dieses somit auf den unteren Schenkel 34 beziehungsweise auf den oberen Schenkel 32 zu. Dabei wird der Abstand L zwischen den Berührpunkten B des Federelements 40 weiter und verhältnismäßig stark verkleinert, und dadurch wird die Federsteifigkeit des Federelements 40 deutlich vergrößert. Somit wird die Federkraft des Federelements 40 deutlich vergrößert und auftretende Schwingungen werden maßgeblich gedämpft.

Die beiden Federelemente 40 sind dabei derart in dem Aufnahmeelement 26 angeordnet, dass der Abstand zwischen den Biegebereichen 46 in Vertikalrichtung kleiner ist als die Dicke des Einführelements 24. Die Dicke des Einführelements 24 ist dabei dessen Ausdehnung in Vertikalrichtung. Dadurch ist sichergestellt, dass das Einführelement 24 nach Einfahren in das Aufnahmeelement 26 stets in Kontakt mit beiden Federelementen 40 ist, auch wenn die Position des Einführelements 24 in Vertikalrichtung toleranzbedingt von der Mittellage abweicht.

Das Federelement 40 gemäß dem zweiten Ausführungsbeispiel, welches in Fig. 6 dargestellt ist, ähnelt in Aufbau und Wirkung weitgehend dem Federelement 40 gemäß dem ersten Ausführungsbeispiel, welches in Fig. 5 dargestellt ist. Im Folgenden werden die Unterschiede zwischen dem zweiten Ausführungsbeispiel und dem ersten Ausführungsbeispiel erläutert.

Der Hakenbereich 42 des Federelements 40 gemäß dem zweiten Ausführungsbeispiel besitzt eine leicht von der U-Form abweichende Form.

Der an einen der Schenkelbereiche 44 anschließende Auflageabschnitt 42a verläuft dabei nicht senkrecht zur Vertikalrichtung sondern schräg zu dieser. Der Auflageabschnitt 42a liegt somit nicht vollständig flach auf dem unteren Schenkel 34 auf sondern nur teilweise und verläuft anschließend zu diesem geneigt.

Der Punkt des Auflageabschnitts42a, an welchem der Auflageabschnitt 42a des Hakenbereichs 42 in den Schenkelbereich 44 übergeht, liegt auf dem unteren Schenkel 34 an. Ein Übergangspunkt P, an welchem der Auflageabschnitt 42a in den Durchführungsabschnitt 42b des Hakenbereichs 42 übergeht, liegt von dem unteren Schenkel 34 in Vertikalrichtung entfernt.

Durch diese Ausführung gemäß dem zweiten Ausführungsbeispiel ist die Federsteifigkeit des Federelements 40 gegenüber der Ausführung gemäß dem ersten Ausführungsbeispiel erhöht. Weiterhin bilden die Übergangspunkte P, an welchen die Auflageabschnitte 42a in die Durchführungsabschnitte 42b der Hakenbereiche 42 übergehen, zusätzliche Abstützungen für das Einführelement 24 im Fall von starken Schwingungen in Vertikalrichtung.

Die Entfernung des Übergangspunktes P, an welchem der Auflageabschnitt 42a in den Durchführungsabschnitt 42b des Hakenbereichs 42 übergeht, von dem unteren Schenkel 34 in Vertikalrichtung ist so bemessen, dass das Einführelement 24 zwischen dem besagten Übergangspunkt P des Federelements 40 an dem unteren Schenkel 34 und dem besagten Übergangspunkt P des Federelements 40 an dem oberen Schenkel 32 hindurch führbar ist. Das bedeutet, die Entfernung der besagten Übergangspunkte P des Federelements 40 an dem unteren Schenkel 34 und des Federelements 40 an dem oberen Schenkel 32 ist größer als die Ausdehnung des Einführelements 24 in Vertikalrichtung.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Fahrzeugsitz
- 2: Sitzteil
- 4: Rückenlehne
- 10: Drehvorrichtung
- 12: Drehachse
- 14: Basisbauteil
- 16: Sitzteilträger
- 18: Drehlager
- 20: Fangeinheit
- 24: Einführelement
- 26: Aufnahmeelement
- 30: Grundkörper
- 32: oberer Schenkel
- 34: unterer Schenkel
- 36: Basisschenkel
- 40: Federelement
- 42: Hakenbereich
- 42a: Auflageabschnitt
- 42b: Durchführungsabschnitt
- 42c: Halteabschnitt
- 44: Schenkelbereich
- 46: Biegebereich
- W: Winkel
- L: Abstand
- K1: erster Kreis
- K2: zweiter Kreis
- M1: erster Mittelpunkt
- M2: zweiter Mittelpunkt
- R: Radius
- T: Tangente
- S: Strecke
- B: Berührpunkt
- P: Übergangspunkt

## Patentansprüche

1. Fahrzeugsitz (1) mit einer Drehvorrichtung (10),
umfassend ein Basisbauteil (14) und einen relativ dazu um eine Drehachse (12) drehbaren Sitzteilträger (16),
sowie mindestens eine Fangeinheit (20) zur Verhinderung eines Auseinanderreißens des Sitzteilträgers (16) von dem Basisbauteil (14) im Crashfall,
wobei die Fangeinheit (20) ein Einführelement (24) und ein Aufnahmeelement (26), in welches das Einführelement (24) einführbar ist, umfasst, und das Aufnahmeelement (26) mindestens ein Federelement (40) aufweist, welches durch einen Kontakt mit dem eingeführten Einführelement (24) eine Verformung erfährt,
**dadurch gekennzeichnet, dass**
das Federelement (40) eine Federsteifigkeit aufweist, welche bei eingeführtem Einführelement (24) annähernd gleich groß ist wie bei nicht eingeführtem Einführelement (24), und dass die Federsteifigkeit bei einer weiteren Verformung durch das Einführelement (24) ansteigt.

2. Fahrzeugsitz (1) nach Anspruch 1, **dadurch gekennzeichnet, dass** das Federelement (40) zentral einen Biegebereich (46) in Form eines Kreissegments mit annähernd konstantem Radius (R) aufweist.

3. Fahrzeugsitz (1) nach Anspruch 2, **dadurch gekennzeichnet, dass** an den Biegebereich (46) beidseitig je ein Schenkelbereich (44) anschließt, welcher bei nicht eingeführtem Einführelement (24) annähernd geradlinig verläuft.

4. Fahrzeugsitz (1) nach Anspruch 3, **dadurch gekennzeichnet, dass** an jeden Schenkelbereich (44) je ein Hakenbereich (42) anschließt, welcher zur Befestigung des Federelements (40) an dem Aufnahmeelement (26) dient, und welcher im Querschnitt U-förmig ausgestaltet ist.

5. Fahrzeugsitz (1) nach Anspruch 4, **dadurch gekennzeichnet, dass** das Aufnahmeelement (26) einen U-förmigen Querschnitt mit einem oberen Schenkel (32), einem unteren Schenkel (34) und einem Basisschenkel (36) aufweist, wobei an dem oberen Schenkel (32) und an dem unteren Schenkel (34) je ein Federelement (40) vorgesehen ist.

6. Fahrzeugsitz (1) nach Anspruch 5, **dadurch gekennzeichnet, dass** die Hakenbereiche (42) jeweils mit einem Auflageabschnitt (42a) an dem Schenkel (32, 34) anliegen.

7. Fahrzeugsitz (1) nach einem der vorstehenden Ansprüche 5 bis 6, **dadurch gekennzeichnet, dass** die Federelemente (40) sich weitgehend in einem Raum befinden, welcher von dem oberen Schenkel (32), dem Basisschenkel (36) und dem unteren Schenkel (34) umgeben ist.

8. Fahrzeugsitz (1) nach Anspruch 5, **dadurch gekennzeichnet, dass** die Biegebereiche (46) der Federelemente (40) einander zugewandt sind und das eingeführte Einführelement (24) zwischen sich aufnehmen.

9. Fahrzeugsitz (1) nach Anspruch 5, **dadurch gekennzeichnet, dass** die Biegebereiche (46) der Federelemente (40) von dem eingeführten Einführelement (24) auseinander und auf die Schenkel (32, 34) zu gedrückt werden.

10. Fahrzeugsitz (1) nach einem der vorstehenden Ansprüche 5 bis 9, **dadurch gekennzeichnet, dass** die Schenkelbereiche (44) bei nicht eingeführtem Einführelement (24) von dem Schenkel (32, 34) unter einem Winkel (W) von 10° bis 20°, vorzugsweise 15° verlaufen.

## Claims

1. Vehicle seat (1) with a turning device (10), comprising a base component (14) and a seat part carrier (16), which is rotatable relative to the base part about an axis of rotation (12), and at least one catching unit (20) in order to prevent the seat part carrier (16) being torn apart from the base component (14) in the event of a crash, wherein the catching unit (20) comprises an insertion element (24) and a receiving element (26), into which the insertion element (24) can be inserted, and the receiving element (26) comprises at least one spring element (40), which undergoes a deformation through contact with the inserted insertion element (24), **characterized in that** the spring element (40) has a spring rigidity which, when the insertion element (24) is inserted, is approximately the same as when the insertion element (24) is not inserted, and that the spring rigidity increases upon a further deformation by the insertion element (24).

2. Vehicle seat (1) according to Claim 1, **characterized in that** the spring element (40) comprises a central bending area (46) in the form of a circular segment of approximately constant radius (R).

3. Vehicle seat (1) according to Claim 2, **characterized in that** an arm area (44), which runs approximately in a straight line when the insertion element (24) is not inserted, adjoins the bending area (46) on each side.

4. Vehicle seat (1) according to Claim 3, **characterized in that** a hook area (42), which serves for fixing the spring element (40) to the receiving element (26) and which is designed with a U-shaped cross section, adjoins each arm area (44).

5. Vehicle seat (1) according to Claim 4, **characterized in that** the receiving element (26) has a U-shaped cross section with an upper arm (32), a lower arm (34) and a base arm (36), wherein one spring element (40) each is provided on the upper arm (32) and on the lower arm (34).

6. Vehicle seat (1) according to Claim 5, **characterized in that** the hook areas (42) each bear with a bearing portion (42a) on the respective arm (32, 34) .

7. Vehicle seat (1) according to one of the preceding Claims 5 to 6, **characterized in that** the spring elements (40) are situated largely in a space which is enclosed by the upper arm (32), the base arm (36) and the lower arm (34).

8. Vehicle seat (1) according to Claim 5, **characterized in that** the bending areas (46) of the spring elements (40) face one another and accommodate the inserted insertion element (24) between them.

9. Vehicle seat (1) according to Claim 5, **characterized in that** the bending areas (46) of the spring elements (40) are forced apart by the inserted insertion element (24) and onto the arms (32, 34).

10. Vehicle seat (1) according to one of the preceding Claims 5 to 9, **characterized in that** the arm areas (44) run away from the arm (32, 34) at an angle (W) of 10° to 20°, preferably 15°, when the insertion element (24) is not inserted.

## Revendications

1. Siège de véhicule (1) comprenant un dispositif de rotation (10), comprenant un composant de base (14) et un support de partie de siège (16) pouvant tourner par rapport à celui-ci autour d'un axe de rotation (12), ainsi qu'au moins une unité de capture (20) pour empêcher un arrachement du support de partie de siège (16) du composant de base (14) en cas de collision, l'unité de capture (20) comprenant un élément d'introduction (24) et un élément de réception (26) dans lequel peut être introduit l'élément d'introduction (24), et l'élément de réception (26) présentant au moins un élément de ressort (40) qui, par un contact avec l'élément d'introduction (24) introduit, subit une déformation,
**caractérisé en ce que**
l'élément de ressort (40) présente une rigidité de ressort qui, lorsque l'élément d'introduction (24) est introduit, est approximativement égale à la rigidité de ressort lorsque l'élément d'introduction (24) n'est pas introduit, et **en ce que** la rigidité de ressort augmente lors d'une déformation supplémentaire par l'élément d'introduction (24).

2. Siège de véhicule (1) selon la revendication 1, **caractérisé en ce que** l'élément de ressort (40) présente centralement une région de flexion (46) sous forme de segment de cercle de rayon approximativement constant (R).

3. Siège de véhicule (1) selon la revendication 2 **caractérisé en ce qu'**une région de branche (44) se raccorde à chaque fois de chaque côté de la région de flexion (46), laquelle s'étend approximativement en ligne droite lorsque l'élément d'introduction (24) n'est pas introduit.

4. Siège de véhicule (1) selon la revendication 3, **caractérisé en ce qu'**au niveau de chaque région de branche (44) se raccorde une région de crochet respective (42), laquelle sert à fixer l'élément de ressort (40) à l'élément de réception (26) et laquelle est configurée avec une section transversale en forme de U.

5. Siège de véhicule (1) selon la revendication 4, **caractérisé en ce que** l'élément de réception (26) présente une section transversale en forme de U avec une branche supérieure (32), une branche inférieure (34) et une branche de base (36), un élément de ressort (40) respectif étant prévu sur la branche supérieure (32) et sur la branche inférieure (34).

6. Siège de véhicule (1) selon la revendication 5, **caractérisé en ce que** les régions de crochet (42) s'appliquent à chaque fois avec une portion d'appui (42a) sur la branche (32, 34).

7. Siège de véhicule (1) selon l'une quelconque des revendications précédentes 5 et 6, **caractérisé en ce que** les éléments de ressort (40) se trouvent essentiellement dans un espace qui est entouré par la branche supérieure (32), la branche de base (36) et la branche inférieure (34).

8. Siège de véhicule (1) selon la revendication 5, **caractérisé en ce que** les régions de flexion (46) des éléments de ressort (40) sont tournées l'une vers l'autre et reçoivent entre elles l'élément d'introduction (24) introduit.

9. Siège de véhicule (1) selon la revendication 5, **caractérisé en ce que** les régions de flexion (46) des éléments de ressort (40) sont repoussées l'une de l'autre par l'élément d'introduction (24) introduit et sont pressées vers les branches (32, 34) .

10. Siège de véhicule (1) selon l'une quelconque des revendications précédentes 5 à 9, **caractérisé en ce que** les régions de branche (44) s'étendent depuis la branche (32, 34) suivant un angle (W) de 10° à 20°, de préférence de 15°, lorsque l'élément d'introduction (24) n'est pas introduit.
